# EUROPÄISCHE PATENTSCHRIFT

(11) **EP 1 821 096 B1**
(45) Veröffentlichungstag und Bekanntmachung des Hinweises auf die Patenterteilung: **11.04.2012**
(21) Anmeldenummer: 07102723.9
(22) Anmeldetag: 20.02.2007
(51) Int. Cl.: G01N 21/55, G06K 19/06

(54) **Ausleseeinheit für ein Signet einer Verpackung**
Reading device for a packaging sign
Dispositif de sélection pour un signet d'un emballage

(30) Priorität: 20.02.2006 DE 102006008319; 15.03.2006 DE 102006012798
(43) Veröffentlichungstag der Anmeldung: 22.08.2007
(73) Patentinhaber: DPG Deutsche Pfandsystem GmbH, 10117 Berlin (DE)
(72) Erfinder: Jansen, Robert, 51149, Köln (DE)
(74) Vertreter: Eisenführ, Speiser & Partner

(56) Entgegenhaltungen:
- EP-A2- 0 820 029
- DE-A1- 4 319 555
- DE-A1- 10 247 252

## Beschreibung

Die Anmeldung betrifft eine Ausleseeinheit für ein Signet einer Verpackung mit einer äußeren Hülle - beispielsweise aus Kunststoff, Blech oder Pappe -, die ein Substrat bildet. Auf die äußere Hülle ist Außen ein Signet aufgebracht, welches mehrere nebeneinander angeordnete Felder mit unterschiedlichen Reflexionseigenschaften aufweist. Eines dieser Felder ist ein Kontrastfeld mit einer vergleichsweise hohen Reflektivität in einem Wellenlängenbereich, der sichtbares und infrarotes Licht umfasst. Ein zweites dieser Felder ist ein Sicherheitsfeld, das eine im Vergleich zum Kontrastfeld geringe Reflektivität in einem sichtbaren Wellenlängenbereich des Lichtes besitzt. Im infraroten Wellenlängenbereich des Lichtes besitzt das Sicherheitsfeld hingegen eine derartige Transparenz, dass die Reflektivität des Sicherheitsfeldes im infraroten Wellenlängenbereich von einem Untergrund des Sicherheitsfeldes bestimmt ist.

Ein derartiges Sicherheitsfeld ist üblicherweise von einer Farbe gebildet, die im sichtbaren Wellenlängenbereich eine sichtbare Absorption (und darum eine geringe Reflektivität) besitzt und im infraroten Wellenlängenbereiche eine hohe Transparenz, so dass die Reflektivität des Sicherheitsfeldes im infraroten Wellenlängenbereich von der Reflektivität des Untergrundes bestimmt ist, auf den die Farbe aufgetragen ist. Der Untergrund ist dabei in der Regel so gestaltet, dass er eine höhere Reflektivität besitzt, als die im sichtbaren Wellenlängenbereich absorbierende Farbe, die auf den Untergrund aufgetragen ist. Dies hat zur Folge, dass das Sicherheitsfeld bei Betrachtung mit Licht im sichtbaren Wellenlängenbereich dunkel erscheint und bei Betrachtung unter Infrarotlicht vergleichsweise heller erscheint. Ein Signet dieser Art zum Aufdruck auf Produkten, deren Verpackung sind beispielsweise auf DE 43 19 555 A1 und DE 10 247 252 bekannt.

Der Erfindung liegt die Aufgabe zugrunde, das Auslesen eines solchen Signets auf einer Verpackung zu verbessern.

Die Erfindung schließt die Erkenntnis ein, dass die Reflexionseigenschaften des Untergrundes des Sicherheitsfeldes unterschiedlich sein können und zwar nicht nur hinsichtlich der Farbe des Untergrundes, sondern auch in Bezug darauf, dass der Untergrund diffus reflektierend sein kann, oder metallisch bzw. total reflektierend, also gerichtet reflektierend. Pappverpackungen oder Verpackungen mit einem Papieretikett bieten in der Regel einen diffus reflektierenden Untergrund. Blechverpackungen - beispielsweise aus Stahlblech oder aus Aluminiumblech - bieten, je nach Coating, in der Regel einen metallisch, also gerichtet reflektierenden Untergrund.

Um die Reflexionseigenschaften des Untergrundes hinsichtlich der Art der Reflexion - diffus oder gerichtet - beim Auslesen des Signets berücksichtigen zu können, weist das Signet ein Signalfeld auf, dass sich an einem fest, leicht zu bestimmenden Ort des Signets befindet und entweder eine vergleichsweise hohe Reflektivität oder eine vergleichsweise niedrige Reflektivität besitzt, je nachdem ob der Untergrund des Sicherheitsfeldes metallisch reflektierend (also gerichtet reflektierend) oder diffus reflektierend ist.

Der Erfindung liegt der Grundgedanke zugrunde, dass die Felder des Signets möglichst entweder eine hohe Reflektivität oder eine geringe Reflektivität (also eine hohe Absorption) bei einer jeweiligen Wellenlänge besitzen sollen. In diesem Sinne besitzt auch das Signalfeld in einem breitbandigen Wellenlängenbereich entweder eine hohe Reflektivität oder eine geringe Reflektivität, wobei beispielsweise eine hohe Reflektivität des Signalfeldes für einen diffus reflektierenden Untergrund steht und eine niedrige Reflektivität des Signalfeldes für einen gerichtet (metallisch) reflektierenden Untergrund oder umgekehrt.

Das Signalfeld kann auch in mehrere Teilsignalfelder unterteilt sein, die entweder hell oder dunkel, also stark oder schwach reflektierend sein können und auf diese Weise weitere Informationen nach Art eines binären Codes wiedergeben können.

Es ist vorteilhaft, wenn das Signet wenigstens zwei Eckmarkierungen aufweist, die breitbandig absorbierend sind, also über einen großen Wellenlängenbereich eine geringe Reflektivität besitzen und daher leicht aufzufinden sind. Vorteilhaft ist es, wenn die Eckmarkierungen eine Form besitzen, die charakteristisch ist und die sich von übrigen Aufdrucken auf der Packung möglichst unterscheidet. Eine derartige geeignete Form ist beispielsweise die Form eines rechtwinkligen Dreiecks, dessen Katheten parallel zu den Kanten des Signets verlaufen.

Ebenso ist es vorteilhaft, dass das Signet zwei Orientierungsmarkierungen aufweist, die das Signalfeld an zwei gegenüberliegenden Seiten begrenzen und die zur leichten Erkennbarkeit eine niedrige Reflektivität über einen großen Wellenlängenbereich besitzen. Diese Orientierungsmarkierungen erleichtern das Auffinden des Signalfeldes unabhängig von dessen Reflektivität, also unabhängig davon ob das Signalfeld hell oder Dunkel ist. Außerdem können die Orientierungsmarkierungen zusätzlich als Eckmarkierungen des Signets dienen, so dass das Signet dann vorzugsweise zwei Eckmarkierungen und zwei Orientierungsmarkierungen aufweist, die je eine Ecke des viereckigen Signets umzeichnen. Dies erleichtert es insbesondere die Position des Sicherheitsfeldes innerhalb des Signets beim Auslesen des Signets auch dann aufzufinden, wenn die Verpackung im Bereich des Signets möglicherweise deformiert ist und daher das Signet nur verzerrt aufgenommen werden kann.

Eine geeignet Größe des Signets liegt zwischen 0,5 und 3 cm², besser noch zwischen 2 und 3 cm². Bei einer derartigen Bemessung des Signets sind die Bestandteile des Signets noch ausreichend groß, ohne dass das Signet selbst zuviel Fläche auf der Verpackung einnimmt.

Der Erfindungsgedanke wird außerdem durch eine Ausleseeinheit für ein Signet auf einer Verpackung der vorstehend beschriebenen Art verkörpert. Die Ausleseeinheit ist erfindungsgemäß ausgebildet, eine Intensität des von dem Sicherheitsfeld des Signets reflektierten Lichtes in wenigstens zwei unterschiedlichen Wellenlängenbereichen zu erfassen, von denen ein Wellenlängenbereich ein Wellenlängenbereich ist, bei dem die Farbe des Sicherheitsfeldes eine hohe Transparenz besitzt, während der andere Wellenlängenbereich ein Wellenlängenbereich ist, bei dem die Farbe des Sicherheitsfeldes eine hohe Transparenz besitzt, während der andere Wellenlängenbereich ein Wellenlängenbereich ist, bei dem die Farbe des Sicherheitsfeldes eine geringe Reflektivität - also eine hohe Absorption - besitzt, so dass das Sicherheitsfeld in diesem Wellenlängenbereich dunkel erscheint.

Die Ausleseeinheit ist weiterhin ausgebildet, das Signalfeld des Signets auszulesen und eine von zwei Referenzschwellen für die Bewertung der Stärke des von der Ausleseeinheit erfassten, vom Sicherheitsfeld reflektierten Lichtes in Abhängigkeit davon heranzuziehen, ob das Signalfeld eine hohe oder eine niedrige Reflektivität besitzt. Schließlich ist die Ausleseeinheit ausgebildet, die Stärke des von der Ausleseeinheit erfassten, vom Sicherheitsfeld im infraroten Wellenlängenbereich reflektierten Lichtes durch Vergleich mit der eingestellten Referenzschwelle zu bewerten.

Die erfindungsgemäße Ausleseeinheit ist somit ausgebildet, die Helligkeitsschwelle, auf deren Basis die Ausleseeinheit bewertet, ob das Sicherheitsfeld unter infraroter Beleuchtung hell erscheint, so wie es sein sollte, wenn die Farbe des Sicherheitsfeldes transparent ist, in Abhängigkeit davon einzustellen, welche Reflektionseigenschaften der Untergrund des Sicherheitsfeldes hat, nämlich ob der Untergrund diffus reflektierend oder gerichtet reflektierend ist. Die Ausleseeinheit erfasst dies durch Auslesen des Signalfeldes, das im Falle eines metallisch reflektierenden Untergrundes beispielsweise stark absorbierend, also dunkel ist, und im Falle eines diffus reflektierenden Untergrundes in diesem Beispiel hell ist.

Im Falle eines metallischen Untergrundes wird nämlich die Intensität des vom Sicherheitsfeld unter infraroter Beleuchtung reflektierten Lichtes in der Regel geringer sein, als bei einem weißen, diffus reflektierenden Untergrund. Oder anders ausgedrückt: der bei transparenter Farbe des Sicherheitsfeldes erfasste Grauwert ist im Falle eines metallischen Untergrundes ein anderer, dunklerer, als im Falle eines diffus weiß reflektierenden Untergrundes. Da die Referenzschwelle sinnvollerweise so gewählt ist, dass sie nur einen wenig dunkleren Grauwert zulässt, als beim jeweiligen Untergrund zu erwarten ist, ist es sinnvoll nicht nur eine einzige, an den zu erwartenden dunkleren Grauwert bei metallischem Untergrund angepasste Referenzschwelle vorzusehen, sondern alternativ dazu eine spezielle, einem helleren Grauwert entsprechende Referenzschwelle für einen diffus reflektierenden weißen Untergrund.

Die Ausleseeinheit besitzt vorzugsweise ein Bilderfassungsmodul mit einem Flächensensor mit lichtempfindlichen Sensorelementen, die vorzugsweise matrixartig angeordnet sind. Das Bilderfassungsmodul mit Flächensensor dient dem Erfassen eines auf den Sensor abgebildeten Bildes in zwei Dimensionen.

Vor dem Flächensensor ist hierzu üblicherweise eine Optik angebracht, die das Bild eines jeweiligen Signets möglichst scharf auf dem Flächensensor abbildet.

Die lichtempfindlichen Sensorelemente sind sowohl im sichtbaren Wellenlängenbereich des Lichtes als auch im infraroten Wellenlängenbereich lichtempfindlich und somit in der Lage, sowohl Bilder des Signets bei Beleuchtung mit sichtbarem Licht, als auch bei Beleuchtung mit infrarotem Licht aufzunehmen. Ob das Bild des Signets bei sichtbarem Licht oder bei infrarotem Licht aufgenommen wird, hängt bei dieser Ausführungsvariante somit davon ab, mit welchem Licht die Verpackung mit dem Signet beleuchtet wird.

Entsprechend weist die Ausleseeinheit in einer bevorzugten Ausführungsvariante ein Beleuchtungsmodul auf, das ausgebildet und angeordnet ist, einen Sichtbereich des Bilderfassungsmodul gleichzeitig oder abwechselnd mit Licht im sichtbaren Wellenlängenbereich und mit Licht im infraroten Wellenlängenbereich zu beleuchten. Mit Sichtbereich des Bilderfassungsmoduls ist hierbei der Raum gemeint, in dem sich das Signet einer Verpackung befindet, wenn sein Bild scharf auf dem Flächensensor abgebildet wird.

Wenn das Beleuchtungsmodul den Sichtbereich des Bilderfassungsmoduls gleichzeitig mit sichtbarem Licht und mit infrarotem Licht ausleuchtet, sind vor das Bilderfassungsmodul abwechselnd entweder Infrarotsperrfilter oder sogenannte Infrarotfilter zu schalten, die für infrarotes Licht transparent sind und sichtbares Licht sperren, so dass sie bei sichtbarem Licht nahezu undurchsichtig erscheinen. Es können auch zwei Beleuchtungsmodule vorgesehen sein, eines für sichtbares Licht und eines für infrarotes Licht, die abwechselnd eingeschalten werden. Genauso können zwei Bilderfassungseinheiten vorgesehen sein, die aufgrund der Eigenschaften ihres Flächensensors oder aufgrund entsprechender Filter einerseits nur Bilder bei sichtbarem Licht und andererseits nur Bilder bei infrarotem Licht erfassen.

Schließlich ist es auch möglich, ein Beleuchtungsmodul vorzusehen, das gleichzeitig sowohl sichtbares Licht als auch infrarotes Licht aussendet und ein Bilderfassungsmodul, das sowohl für sichtbares als auch für infrarotes Licht empfindlich ist, ohne dass weitere Filter benötigt werden. Das bei dieser Variante letztendlich erfasste Bild des Signets wäre im Bereich der Eckmarkierungen und der Orientierungsmarkierungen dunkel, da die Eckmarkierungen und die Orientierungsmarkierungen sowohl sichtbares wie auch infrarotes Licht absorbieren. Das Kontrastfeld wäre hell, da das Kontrastfeld sowohl für sichtbares als auch für infrarotes Licht eine hohe Reflektivität besitzt. Das Sicherheitsfeld hätte hingegen einen mittleren Grauwert, da das Sicherheitsfeld zwar sichtbares Licht absorbiert, für Infrarotlicht aber eine relativ hohe Reflektivität besitzt, die in jedem Falle höher ist, als die Reflektivität der Eckmarkierungen oder der Orientierungsmarkierungen bei infrarotem Licht. Selbst wenn das Sicherheitsfeld bei infrarotem Licht die gleiche hohe Reflektivität besäße, wie das Kontrastfeld, wird es bei der letztgenannten Ausführungsvariante, bei der das Signet sowohl mit sichtbarem wie auch mit infrarotem Licht beleuchtet und das reflektierte Licht breitbandig erfasst wird, dazu kommen, dass das Sicherheitsfeld nicht ganz hell, sondern grau erscheint, da es ja in jedem Falle sichtbares Licht absorbiert.

In allen Varianten besitzt das Beleuchtungsmodul vorzugsweise Lichtquellen, die schmalbandig sind, so dass die spektrale Bandbreite (von Halbwert des Maximums zu Halbwert des Maximums (FWHM: full with at half maximum)) jeweils kleiner als 60 nm ist. Die mittlere Wellenlänge zwischen diesen beiden Halbwertswellenlängen wird im Rahmen dieser Beschreibung als zentrale Wellenlänge des jeweiligen Wellenlängenbereichs bezeichnet.

Das Beleuchtungsmodul ist vorzugsweise so ausgebildet, dass es Licht im sichtbaren Wellenlängenbereich in zwei Teilwellenlängenbereichen ausstrahlt, deren zentrale Wellenlängen vorzugsweise mehr als 200 nm auseinanderliegen.

Die Intensität des kurzwelligeren dieser beiden Wellenlängenbereiche beträgt vorzugsweise zwischen 25 und 40 % der Gesamtintensität des in den beiden Teilwellenlängenbereichen ausgestrahlten sichtbaren Lichtes. Besonders geeignete Lichtquellen sind Leuchtdioden. Diese haben kurze Reaktionszeiten und schmale Bandbreiten.

Das Beleuchtungsmodul ist vorzugsweise so ausgebildet, dass der Sichtbereich des Erfassungsmoduls, in dem sich eine bewertende Verpackung befindet, derart gleichmäßig ausgeleuchtet wird, dass die Intensitätsdifferenz über den Sichtbereich höchstens 25 % beträgt.

Weiterhin ist das Beleuchtungsmodul vorzugsweise so angeordnet, dass der auf eine Flächennormale des zu beleuchtenden Signets bezogene Beleuchtungswinkel zwischen 20° und 45° beträgt.

Das Bilderfassungsmodul mit zugehöriger Optik zum Abbilden eines zu bewertenden Signets auf dem Flächensensor ist vorzugsweise so gestaltet, dass 1 mm² des Signets von wenigstens vier ganzen Sensorelementen (Pixeln) erfasst wird.

Die Ausleseeinheit umfasst vorzugsweise eine Auswerteeinheit, die mit dem Bilderfassungsmodul verbunden ist und die ausgebildet ist, mittlere Grauwerte für das Kontrastfeld, die Eckmarkierungen und die Orientierungsmarkierungen und das Sicherheitsfeld zu erfassen, und zwar vorzugsweise separat für eine Beleuchtung mit sichtbarem Licht und eine Beleuchtung mit infrarotem Licht. Eine mit der Auswerteeinheit verbundene Bewertungseinheit ist schließlich ausgebildet, eine Bewertung des jeweils erfassten Signets auf Basis der erfassten Grauwerte und der jeweils eingestellten der beiden Referenzschwellen für den Grauwert des Sicherheitsfeldes durchzuführen. Wenn die Bewertung der Grauwerte durch die Bewertungseinheit ergibt, dass insbesondere die Grauwerte im Bereich des Abbildes des Sicherheitsfeldes bei infraroter Beleuchtung unterhalb der jeweils vorgegebenen Referenzschwelle (unterschiedlich für diffus und gerichtet reflektierenden Untergrund) liegen, erfolgt die Bewertung des Signets als in Ordnung. Anderenfalls erfolgt eine Bewertung als nicht in Ordnung. Letzteres hätte bei der vorgesehenen Verwendung in einem Pfandautomaten die Wirkung, dass eine Verpackung nicht angenommen, sondern zurückgenommen wird. Eine Erstattung des Pfandwertes erfolgt dann nicht. Wird hingegen ein jeweils erfasstes Signet als in Ordnung bewertet, wird die entsprechende Verpackung von einem Rücknahmeautomaten mit der erfindungsgemäßen Ausleseeinheit angenommen und der Pfandwert erstattet.

Die Erfindung soll nun anhand eines Ausführungsbeispieles mit Bezug auf die Figuren näher erläutert werden:
- Figur 1:: zeigt beispielhaft eine Verpackung mit Signet;
- Figur 2:: zeigt ein Ausführungsbeispiel einer einfachsten Variante eines Signets für eine Verpackung;
- Figur 3:: zeigt eine erweiterte Ausführungsvariante des Signets aus Figur 2;
- Figur 4:: zeigt das Signet aus Figur 3 in seiner Form für einen anderen Untergrund;
- Figur 5:: zeigt eine alternative Ausführungsvariante eines Signets;
- Figur 6:: zeigt eine schematische Darstellung einer erfindungsgemäßen Ausleseeinheit.

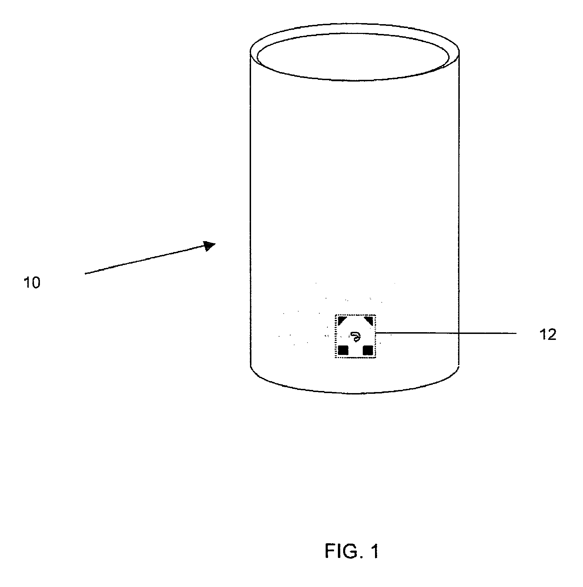

Figur 1 zeigt beispielhaft eine Verpackung 10 in Form einer Dose mit einem Signet 12.

Das Signet 12 dient dazu, die Verpackung 10 als eine Verpackung zu kennzeichnen, für die beim Erwerb durch einen Verbraucher Pfand zu zahlen ist, den der Verbraucher bei Rückgabe der Verpackung zurück erhält. Das Signet ist so gestaltet, dass es nicht ohne weiteres möglich ist, solche Verpackungen, für die kein Pfand bezahlt wurde, mit dem Signet auszustatten. Da der Pfandwert größer ist als der Verpackungswert, würde demjenigen, der die Verpackung zurücknimmt und den Pfand auszahlt, im Falle von Verpackungen mit gefälschtem Signet ein Schaden entstehen.

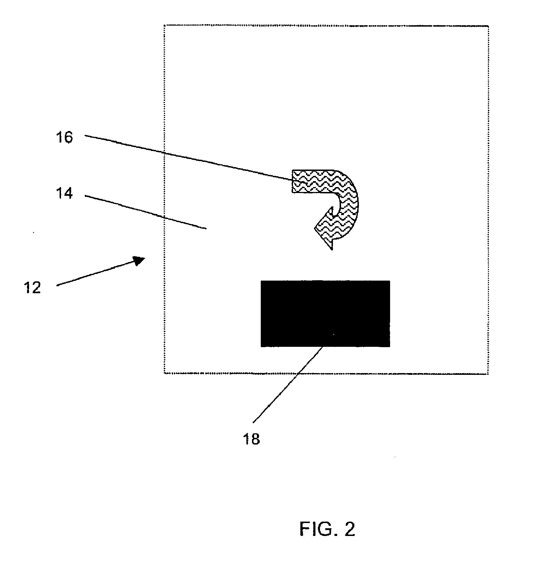

Figur 2 zeigt die wesentlichen Merkmale des Signets 12, nämlich eine stark reflektierende Kontrastfeld 14, der ein Sicherheitsfeld 16 und ein Signalfeld 18 umschließt. Das Kontrastfeld 14 ist in einem großen Wellenlängenbereich stark reflektierend, insbesondere im sichtbaren Wellenlängenbereich des Lichtes sowie in dessen infrarotem Wellenlängenbereich.

Das Sicherheitsfeld 16 hat die Eigenschaft, dass es im sichtbaren Wellenlängenbereich des Lichtes, also unter Betrachtung bei sichtbarem Licht, schwach reflektierend ist, also stark absorbierend und daher dunkel erscheint.

Bei Betrachtung unter infrarotem Licht, beispielsweise mit einer infrarotempfindlichen Kamera, ist das Sicherheitsfeld 16 hingegen stark reflektierend, beispielsweise genauso stark reflektierend wie das Kontrastfeld 14. Diese Eigenschaft unterschiedlicher Reflektivität bei verschiedenen Wellenlängen erhält das Sicherheitsfeld 16 dadurch, dass auf einen stark reflektierenden Untergrund eine Farbe gedruckt ist, die im sichtbaren Wellenlängenbereich stark absorbierend ist, während sie im infraroten Wellenlängenbereich möglichst transparent ist. Bei Betrachtung des Sicherheitsfeldes 16 unter Infrarotlicht wird die Reflektivität des Sicherheitsfeldes 16 also vom Untergrund des Sicherheitsfeldes 16 bestimmt, der stark reflektierend ist.

Dies hat zur Folge, dass bei Betrachtung der Verpackung 10 bei normalem Tageslicht das Sicherheitsfeld 16 deutlich als dunkles Feld vor hellem Hintergrund zu erkennen ist, während sich das Sicherheitsfeld bei Betrachtung unter Infrarotlicht mit einer entsprechenden infrarotempfindlichen Kamera kaum zu erkennen ist, da das Sicherheitsfeld 16 ähnlich stark infrarotreflektierend ist, wie das Kontrastfeld 14.

Das Sicherheitsfeld 16 hat eine asymmetrische Form, so dass dessen Ausrichtung in Bezug auf das übrige Signet eindeutig zu erkennen ist.

Weiterer Bestandteil des Signets 12 ist ein Signalfeld 18, das je nach Art der Verpackung in einem breiten Wellenlängenbereich, der sichtbares wie infrarotes Licht einschließt, entweder stark absorbierend (wie in Figur 2 dargestellt) oder stark reflektierend ist. Im letztgenannten Fall - stark reflektierendes Signalfeld 18 - besitzt das Signalfeld 18 die gleiche Farbe wie das Kontrastfeld 14 und ist somit praktisch nicht vorhanden, sondern ausschließlich durch die abstrakte Definition seines vorgesehenen Ortes bestimmt. In dem Ausführungsbeispiel gemäß Figur 2 ist das Signalfeld 18 in stark absorbierender Farbe dargestellt, also schwach reflektierend und daher dunkel.

Das Signalfeld 18 dient dazu, einer Vorrichtung zum Auslesen des Signets zu signalisieren, welche Eigenschaft der Untergrund hat, auf den das Signet aufgedruckt ist, da dieser Untergrund bei der Betrachtung des Sicherheitsfeldes 16 unter infrarotem Licht zum Vorschein kommt. Die Erscheinung des Untergrundes bei Betrachtung unter infrarotem Licht hängt dabei davon ab, ob der Untergrund metallisch reflektierend ist (auch als total reflektierend oder gerichtet reflektierend bezeichnet) oder diffus reflektierend, wie dies beispielsweise bei weißem Papier oder weißer Druckfarbe der Fall ist. Das Kontrastfeld 14 ist in der Regel von einer diffus reflektierenden Farbe mit hoher Reflektivität gebildet. Wenn der Untergrund die gleiche oder sehr ähnliche Eigenschaften hat, ist bei Betrachtung des Signets unter infrarotem Licht praktisch keinerlei oder nur ein sehr geringer Kontrast zwischen Kontrastfeld 14 und Sicherheitsfeld 16, genauer: zwischen Kontrastfeld 14 und dem Untergrund des Sicherheitsfeldes 16 gegeben. Hingegen wird das Sicherheitsfeld 16 im Falle eines metallischen Untergrundes bei Betrachtung unter Infrarotlicht dunkler erscheinen, als der das Sicherheitsfeld 16 umgebende Kontrastfeld 14.

Um mit Hilfe einer Auslesevorrichtung möglichst sicher feststellen zu können, ob das Sicherheitsfeld 16 mit einer den Spezifikationen entsprechenden, charakteristischen Farbe gedruckt ist, kommt es darauf an, für den Kontrast zwischen dem Kontrastfeld 14 und Sicherheitsfeld 16 sowohl bei Betrachtung unter sichtbarem Licht als auch bei Betrachtung unter Infrarotlicht jeweils eine geeignete Referenzschwelle für den Kontrast zur Hand zu haben.

Die für sichtbares Licht geltende Referenzschwelle ist dabei vom Untergrund unabhängig. Die für infrarotes Licht geltende Referenzschwelle ist jedoch idealerweise von dem Untergrund abhängig, auf das die Farbe des Sicherheitsfeldes aufgedruckt ist.

Daher ist eine Vorrichtung zum Auslesen des Signets 12 erfindungsgemäß derart umschaltbar ausgestaltet, dass sie für die Auswertung des Signets 12 bei Betrachtung unter infrarotem Licht eine von zwei voneinander abweichenden Referenzschwellen zugrunde legt. Das Umschalten zwischen diesen Referenzschwellen wird dabei durch das Signalfeld 18 bewirkt. Ist dieses Signalfeld - wie in Figur 2 dargestellt - dunkel, also schwach reflektierend und stark absorbierend, dann schaltet die Auslesevorrichtung für das Signet auf die Referenzschwelle für einen metallischen Untergrund. Wenn hingegen das Signalfeld stark reflektierend und beispielsweise identisch mit dem Kontrastfeld 14 ist, schaltet die Auslesevorrichtung auf die Referenzschwelle für einen diffus reflektierenden Hintergrund. Die Zuordnung von Reflektivität des Signalfeldes zu jeweils auszuwählender Referenzschwelle kann auch umgekehrt sein. Entscheidend ist, dass es eine feste Zuordnung gibt.

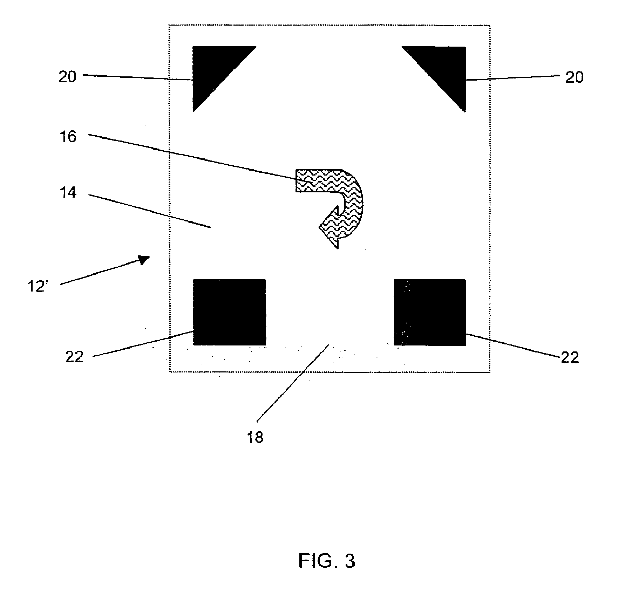

Um das Auffinden des Signets 12' (siehe Figur 3) auf einer Verpackung 10 sowie das Auffinden des Signalfeldes 18 innerhalb des Signets 12' zu erleichtern, weist das Signet 12' vorzugsweise weitere Felder auf, nämlich einmal in Form von Eckmarkierungen 20 und zum anderen in Form von Orientierungsmarkierungen 22.

Sowohl die Eckmarkierungen 20 als auch die Orientierungsmarkierungen 22 haben die Eigenschaft, sowohl bei sichtbarem Licht als auch unter infrarotem Licht stark absorbierend, also schwach reflektierend zu sein und somit dunkel zu erscheinen.

Die Eckmarkierungen haben die Form von rechtwinkligen, gleichschenkligen Dreiecken. Diese Form ist besonders geeignet, weil derartige Formen im übrigen Verpackungsaufdruck praktisch nicht vorkommen. Die Katheten des jeweiligen gleichschenkligen Dreieckes 20 verlaufen dabei parallel zu den Kanten des Signets 12'. Die Hypotenusen der Eckmarkierungen 20 sind somit in Bezug auf das Signet 12' nach innen gewandt.

Die Orientierungsmarkierungen 22 wirken zum einen als Eckmarkierungen zum Auffinden zwei weiterer Ecken des insgesamt viereckigen Signets 12'. Außerdem schließen sie zwischen sich das Signalfeld 18 ein, so dass dieses auch dann leicht aufzufinden ist, wenn es die gleiche Farbe hat, wie das Kontrastfeld 14, so wie es beispielhaft in Figur 3 dargestellt ist.

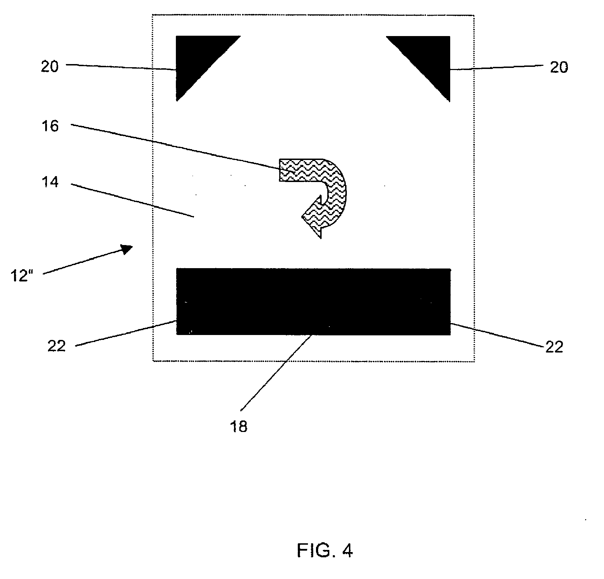

Figur 4 zeigt grundsätzlich das gleiche Signet 12" wie Figur 3. Der einzige Unterschied zwischen dem Signet 12" aus Figur 4 gegenüber dem Signet 12' aus Figur 3 besteht darin, dass das Signalfeld 18 bei dem Signet 12" aus Figur 4 schwach reflektierend, also dunkel ist, und somit die gleiche Farbe besitzt, wie die Orientierungsmarkierungen 22 und die Eckmarkierungen 20, während das Signalfeld 18' des Signets 12' aus Figur 3 stark reflektierend ist und somit die gleiche Farbe besitzt, wie das Kontrastfeld 14.

Metallverpackungen, wie beispielsweise Dosen etc., bieten üblicherweise (je nach Beschichtung) einen metallischen Untergrund für das Sicherheitsfeld 16. Solche Verpackungen werden daher mit einem Signet 12" gemäß Figur 4 bedruckt. Papierverpackungen oder Verpackungen mit Papieretiketten bieten für das Sicherheitsfeld 16 hingegen üblicherweise einen weißen Untergrund und werden mit dem Signet 12' gemäß Figur 3 bedruckt. Die Zuordnung kann auch genau umgekehrt sein. Es ist jedoch entscheidend, eine einmal getroffene Zuordnung konsequent fortzuführen.

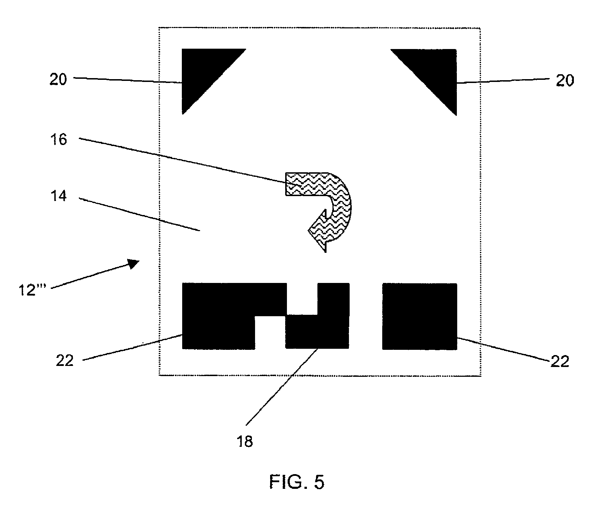

Figur 5 zeigt eine Variante eines Signets 12'" mit einem Signalfeld 18", das in insgesamt 8 Teilsignalfelder unterteilt ist, die entweder stark oder schwach reflektierend sind. Die acht Teilfelder können auf diese Weise einen 8 Bit (1 Byte) umfassenden Code wiedergeben. Je nach Wert des jeweiligen Bits - 0 oder 1 - ist das zugehörige Teilfeld stark oder schwach reflektierend. Im Ausführungsbeispiel gibt das Signalfeld 18" das Byte 10100110 oder 01011001 wieder, je nachdem, ob eine starke oder eine schwache Reflektivität dem Bitwert 1 zugeordnet ist. Mit einem derartigen, unterteilten Signalfeld 18" lässt sich nicht nur eine zweiwertige Information (gerichtet reflektierend oder diffus reflektierend) wiedergeben sondern im Ausführungsbeispiel eine 256-wertige Information.

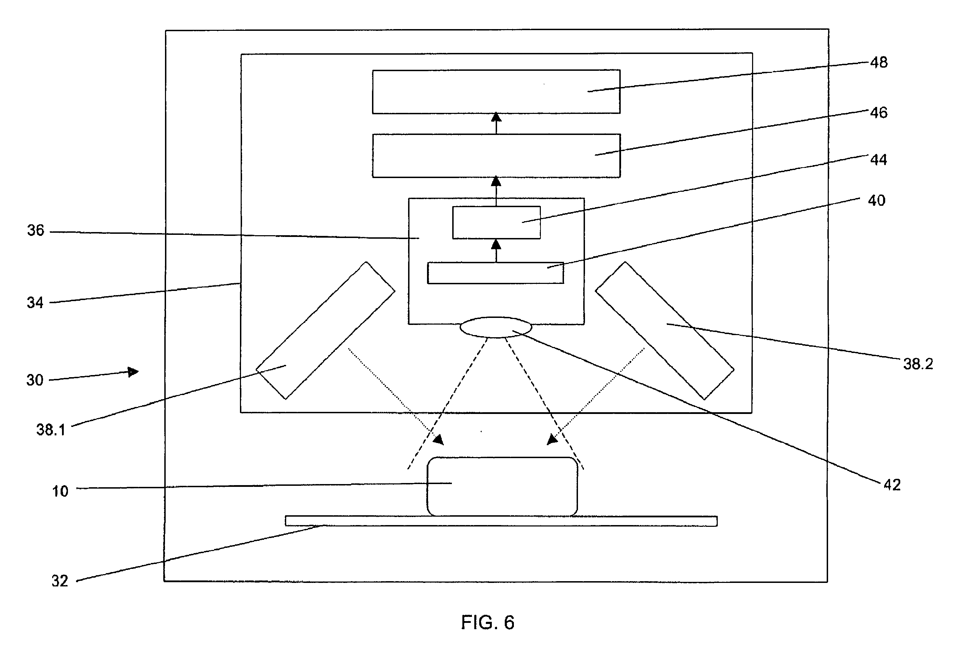

Anhand der in Figur 6 dargestellten, schematischen, skizzenhaften Darstellung einer Auslesevorrichtung 30 zum Auslesen von Signets 12 auf Verpackungen wie der Verpackung 10 sollen nun deren wesentliche Bestandteile sowie deren Funktionsweise beschrieben werden.

Die Auslesevorrichtung 30, die beispielsweise Teil eines Rücknahmeautomaten für Getränkeverpackungen sein kann, weist zum einen eine Transporteinrichtung 32 auf, mit der eine Verpackung 10' so vor einer Ausleseeinheit 34 positioniert werden kann, dass sie sich im Sichtbereich der Bilderfassungseinheit 36 der Ausleseeinheit 34 befindet. Der Sichtbereich ist in Figur 5 durch gestrichelte schräge Linien angedeutet.

Zum Ausleuchten des Sichtbereiches ist ein Beleuchtungsmodul vorgesehen, das zwei Beleuchtungseinheiten 38.1 und 38.2 aufweist. Die Beleuchtungsrichtung und damit der Winkel, in dem die Beleuchtung auf eine auszulesende Verpackung 10 fällt, sind durch punktierte Pfeile angedeutet. Der Beleuchtungswinkel sollte zur Flächenormalen der Verpackung 10 in einem Winkelbereich zwischen 20° und 45° liegen. Die Beleuchtungseinheiten 38.1 und 38.2 des Beleuchtungsmoduls sind entsprechend angeordnet und ausgerichtet.

Die Beleuchtungseinheiten 38.1 und 38.2 besitzen eine Vielzahl von Leuchtdioden (LED) als Lichtquellen. Die Beleuchtungseinheit 38.1 ist zur Beleuchtung der Verpackung 10 mit infrarotem Licht ausgebildet, während die Beleuchtungseinheit 38.2 die Verpackungseinheit 10 mit sichtbarem Licht beleuchtet. Die Beleuchtungseinheit 38.2 besitzt zwei Arten von Leuchtdioden, nämlich eine erste Art von Leuchtdioden, die blaues, sichtbares Licht aussenden und eine zweite Art von Leuchtdioden, die rotes, sichtbares Licht aussenden. Das sichtbare Licht, welches die Beleuchtungseinheit 38.2 ausstrahlt, setzt sich somit aus zwei Wellenlängenbereichen zusammen mit jeweils einer zentralen Wellenlänge im blauen Bereich des sichtbaren Spektrums und einer zentralen Wellenlänge im roten Bereich des sichtbaren Spektrums. Die Halbwertbandbreite der beiden vom Beleuchtungsmodul 38.2 für sichtbares Licht ausgestrahlten Teilwellenlängenbereiche beträgt jeweils weniger als 50 nm.

Mit Hilfe des Beleuchtungsmoduls und seinen Beleuchtungseinheiten 38.1 und 38.2 lassen sich somit gezielte Beleuchtungsszenarien einstellen. Im üblichen Betrieb werden die Beleuchtungseinheiten 38.1 und 38.2 abwechselnd betrieben, so dass die Verpackung 10 entweder nur mit infrarotem Licht aus der Beleuchtungseinheit 38.1 oder mit sichtbarem Licht von der Beleuchtungseinheit 38.2 beleuchtet wird. Wie eingangs erläutert, ist es jedoch auch möglich, die Verpackung 10 permanent durch beide Beleuchtungseinheiten 38.1 und 38.2 zu beleuchten.

Das von der Oberfläche der Verpackung 10 reflektierte Licht wird von dem Bilderfassungsmodul 36 aufgenommen. Dazu besitzt das Bilderfassungsmodul 36 einen Flächensensor 40 und eine Optik 42, die ein Abbild der Oberfläche der Verpackung 10 scharf auf einer Oberfläche des Flächensensors 40 abbildet. Die Oberfläche des Flächensensors 40 wird von einer Vielzahl lichtempfindlicher Sensorelemente gebildet. Diese sind vorzugsweise matrixartig angeordnet. Die Sensorelemente des Flächenchips 40 sowie die Optik 42 sind so ausgelegt, dass ein Quadratmillimeter der Oberfläche der Verpackung 10 auf eine Teiloberfläche des Flächensensors 40 derart abgebildet wird, dass die Teiloberfläche mindestens vier vollständige Sensorelemente enthält. Somit richtet sich der Abbildungsmaßstab, mit der die Optik 42 ein Bild der Oberfläche der Verpackung 10 auf der Oberfläche des Flächensensors 40 abbildet nach der Größe, den die Sensorelemente auf der Oberfläche des Flächensensors 40 einnehmen und dem Abstand der Sensorelemente voneinander. Es versteht sich von selbst, dass die Optik 42 so ausgebildet ist, dass sie die Oberfläche der Verpackung 10 im Bereich einer durch variierende Verpackungsdurchmesser erforderlichen Schärfentiefe scharf auf dem Flächensensor 40 abbildet.

Die Sensorelemente des Flächensensors 40 sind breitbandig lichtempfindlich, das heißt wenigstens in den Teilwellenlängenbereichen des Lichtes, die von den Beleuchtungseinheiten 38.1 und 38.2 gleichzeitig oder abwechselnd ausgestrahlt werden. Der von jedem einzelnen Sensorelement des Flächensensors 40 gelieferte Ausgangswert entspricht der Gesamtintensität allen Lichtes in den verschiedenen Wellenlängenbereichen, die von dem jeweiligen Sensorelement erfasst wird. Diese gesamte Intensität ist die Intensität des vom Sensorelement erfassten infraroten Lichtes, wenn die Verpackung ausschließlich von der Beleuchtungseinheit 38.1 mit infrarotem Licht beleuchtet wird. Genauso entspricht der Ausgangswert eines jeweiligen Sensorelementes der jeweiligen Intensität im sichtbaren Wellenlängenbereich des Lichtes, wenn die Verpackungsoberfläche ausschließlich von der Beleuchtungseinheit 38.2 mit sichtbarem Licht beleuchtet wird. Wenn die Oberfläche der Verpackung 10 hingegen sowohl von der Beleuchtungseinheit 38.1 als auch von der Beleuchtungseinheit 38.2 gleichzeitig mit infrarotem wie mit sichtbarem Licht beleuchtet wird, hängt die von einem jeweiligen Sensorelement erfasste Lichtintensität von der Summe der Intensität ab, mit der ein jeweiliges, dem Sensorelement über die Abbildung zugeordnetes Oberflächenelement infrarotes und sichtbares Licht reflektiert.

Dies bedeutet, dass Sensorelemente, die beispielsweise einen Teil des Kontrastfelds 14 des Signets 12 erfassen, immer einen großen Helligkeitswert erfassen und somit einen großen Ausgangswert liefern. Hingegen werden Sensorelemente, die einen Teil einer Orientierungsmarkierung 22 oder einer Eckmarkierung 20 erfassen, immer einen geringen Helligkeitswert erfassen und somit auch einen geringen Ausgangswert liefern, ganz unabhängig davon, ob die Beleuchtung mit infrarotem Licht oder mit sichtbarem Licht erfolgt. Der Helligkeitswert, den ein Sensorelement erfasst, auf den ein Teil des Sicherheitsfeldes 16 abgebildet wird, hängt hingegen von der Art der Beleuchtung ab. Bei Beleuchtung der Verpackung mit sichtbarem Licht ist die vom Sicherheitsfeld 16 reflektierte Intensität gering, so dass ein einen Teil des Sicherheitsfeldes 16 erfassendes Sensorelement nur einen geringen Ausgangswert liefert. Erfolgt die Beleuchtung der Verpackung jedoch mit infrarotem Licht, ist die vom Sicherheitsfeld reflektierte Intensität des IR-Lichtes - je nach Untergrund - deutlich höher und kann beispielsweise der vom Kontrastfeld 14 reflektierten Intensität entsprechen. Entsprechend liefert ein Sensorelement, auf dem ein Teil des Sicherheitsfeldes abgebildet wird, bei Beleuchtung der Verpackung 10 mit infrarotem Licht einen hohen Ausgangswert. Wird die Verpackung 10 hingegen gleichzeitig mit sichtbarem wie mit infrarotem Licht beleuchtet ist der von einem das Sicherheitsfeld erfassenden Sensorelement gelieferte Ausgangswert ein mittlerer Ausgangswert.

Innerhalb des Bilderfassungsmoduls 36 erfolgt eine Vorverarbeitung der vom Flächensensor 40 gelieferten Ausgangswerten in einer Vorverarbeitungseinheit 44. Die aufbereiteten Intensitätswerte (Ausgangswerte der Sensorelemente des Flächensensors 40) werden einer Auswerteeinheit 46 zugeführt, in der zum einen eine Erfassung der verschiedenen Bereich des Signets mit Hilfe an sich bekannter Mustererkennungsverfahren erfolgt.

Diese Bilderfassung des Abbildes des Signets dient auch dazu, den Ort des Signalfeldes 18 zu bestimmen, um dessen Intensität auslesen zu können. Je nachdem welche Intensität das vom Signalfeld 18 reflektierte Licht hat schaltet die Auswerteeinheit 46 eine andere Referenzschwelle für die Bewertung der vom Sicherheitsfeld 16 reflektierten Intensität infraroten Lichtes ein.

Zum anderen werden die von den verschiedenen Feldern des Sicherheitssignet gelieferten Intensitätswerte zur Bewertung des jeweiligen Signets mit jeweiligen Referenzschwellen verglichen. Diese Bewertung erfolgt durch eine Bewertungseinheit, die Teil der Auswerteeinheit 46 ist und daher in Fig. 5 nicht näher dargestellt. Von besonderer Bedeutung für die Bewertung ist dabei die Referenzschwelle für die Intensitätswerte, die bei Beleuchtung des Signets mit infrarotem Licht im Bereich des Sicherheitsfeldes 16 erfasst wurden.

Die Bewertung der Intensitätswerte, die dem Sicherheitsfeld 16 bei Beleuchtung mit infrarotem Licht zuzuordnen sind, erfolgt dabei unter Berücksichtigung einer von zwei Referenzschwellen, die von der Auswerteeinheit 46 in Abhängigkeit davon gewählt wird, welche Intensität das Signet im Bereich des Signalfeldes 18 aufweist. Je nachdem ob diese Intensität über oder unter der Referenzschwelle liegt, wird eine Verpackung akzeptiert und die Auszahlung des Pfandes veranlasst oder nicht.

Die Auswerteeinheit 46 ist außerdem mit einer Steuereinheit 48 verbunden, die beispielsweise der Ansteuerung der Beleuchtungseinheiten 38.1 und 38.2 dient und die außerdem die Transportvorrichtung 32 steuert, um beispielsweise die Verpackung 10 mittels der Transporteinrichtung 32 so zu drehen, dass sich das Signet auf der Oberfläche der Verpackung 10 im Sichtbereich der Ausleseeinheit 36 befindet. Auch hierzu dient die Bilderkennung durch die Auswerteeinheit 46.

Die Steuereinheit steuert außerdem die Pfanderstattung so wie die Rücknahem von Verpackungen.

## Patentansprüche

1. Ausleseeinheit (34) für ein Signet (12) einer Verpackung mit einer äußeren Hülle, die ein Substrat bildet, auf das außen das Signet (12) aufgebracht ist, wobei das Signet mehrere nebeneinander angeordnete Felder mit unterschiedlichen Reflexionseigenschaften aufweist, von denen ein Feld ein Sicherheitsfeld (16) mit einer Farbe ist, die eine geringe Reflektivität in einem sichtbaren Wellenlängenbereich des Lichtes besitzt und im infraroten Wellenlängenbereich des Lichtes eine derartige Transparenz besitzt, dass die Reflektivität des Sicherheitsfeldes (16) im infraroten Wellenlängenbereich von einem Untergrund des Sicherheitsfeldes (16) bestimmt ist, auf den die Farbe aufgetragen ist und der eine höhere Reflektivität besitzt als die Farbe des Sicherheitsfeldes (16) im sichtbaren Wellenlängenbereich des Lichtes, so dass die Reflektivität des Sicherheitsfeldes (16) im infraroten Wellenlängenbereich höher ist als im sichtbaren Wellenlängenbereich, wobei das Signet (12) ferner ein Signalfeld (18) umfasst, welches in einer festen räumlichen Zuordnung zum Sicherheitsfeld (16) angeordnet ist und in einem breiten Wellenlängenbereich, der sichtbares wie infrarotes Licht einschließt entweder eine vergleichsweise hohe Reflektivität oder eine vergleichsweise niedrige Reflektivität aufweist, je nach dem ob der Untergrund des Sicherheitsfeldes (16) metallisch reflektierend oder diffus reflektierend ist., **dadurch gekennzeichnet, dass** die Ausleseeinheit (34) ausgebildet ist,
- eine Intensität von dem Sicherheitsfeld (16) des Signets (12) reflektierten Lichtes in wenigstens zwei unterschiedlichen Wellenlängenbereichen zu erfassen, von denen ein Wellenlängenbereich ein Wellenlängenbereich ist bei dem die Farbe des Sicherheitsfeldes (16) eine hohe Transparenz besitzt, während der andere Wellenlängenbereich ein Wellenlängenbereich ist bei dem die Farbe des Sicherheitsfeldes (16) eine geringe Reflektivität besitzt, so dass das Sicherheitsfeld (16) in diesem Wellenlängenbereich dunkel erscheint,
- das Signalfeld (18) des Signets auszulesen (12),
- eine von zwei Referenzschwellen für die Bewertung der Stärke des von der Ausleseeinheit (34) erfassten, vom Sicherheitsfeld (16) reflektierten Lichtes in Abhängigkeit davon einzustellen, ob dass Signalfeld (18) eine hohe oder eine niedrige Reflektivität besitzt, und
- die Stärke des von der Ausleseeinheit (34) erfassten, vom Sicherheitsfeld im infraroten Wellenlängenbereich reflektierten Lichtes durch Vergleich mit der eingestellten Referenzschwelle zu bewerten.

2. Ausleseeinheit nach Anspruch 1, **dadurch gekennzeichnet, dass** die Ausleseeinheit ein Bilderfassungsmodul (36) mit einem Flächensensor (40) mit vorzugsweise matrixartig angeordneten, lichtempfindlichen Sensorelementen zum Erfassen eines auf den Sensor abgebildeten Bildes in zwei Dimensionen aufweist, die sowohl im sichtbaren Wellenlängenbereich des Lichtes als auch im infraroten Wellenlängenbereich lichtempfindlich sind.

3. Ausleseeinheit nach Anspruch 2, **dadurch gekennzeichnet, dass** die Ausleseeinheit (34) ein Beleuchtungsmodul (38.1, 38.2) aufweist, das ausgebildet und angeordnet ist, einen Sichtbereich des Bilderfassungsmoduls (36) gleichzeitig oder abwechselnd mit Licht im sichtbaren Wellenlängenbereich und im infraroten Wellenlängenbereich zu beleuchten.

4. Ausleseeinheit nach Anspruch 3, **dadurch gekennzeichnet, dass** das Beleuchtungsmodul (38.1, 38.2) im Betrieb der Ausleseeinheit (34) Licht im sichtbaren Wellenlängenbereich mit zwei Hauptwellenlängen ausstrahlt, von denen eine rotem Licht entspricht und die andere Hauptwellenlänge blauem Licht entspricht.

5. Ausleseeinheit nach Anspruch 3 oder 4, **dadurch gekennzeichnet, dass** das Beleuchtungsmodul (38.1, 38.2) Leuchtdioden als Lichtquellen aufweist.

6. Ausleseeinheit nach Anspruch 5, **dadurch gekennzeichnet, dass** das Beleuchtungsmodul (38.1, 38.2) unterschiedliche Leuchtdioden aufweist, von denen eine erste Anzahl von Leuchtdioden im Betrieb der Ausleseeinheit Licht in einem infraroten Wellenlängenbereich emittiert, dessen Wellenlänge derart auf die Farbe des Sicherheitsfeldes (16) abgestimmt ist, dass die emittierte Wellenlänge maximal 100 nm über einer Wellenlänge liegt, bei der die Transparenz der Farbe zwischen 40% und 60% liegt.

7. Verfahren zum Betreiben einer Ausleseeinheit (34) für ein Signet (12) einer Verpackung mit einer äußeren Hülle, die ein Substrat bildet, auf das außen das Signet (12) aufgebracht ist, wobei das Signet mehrere nebeneinander angeordnete Felder mit unterschiedlichen Reflexionseigenschaften aufweist, von denen ein Feld ein Sicherheitsfeld (16) mit einer Farbe ist, die eine geringe Reflektivität in einem sichtbaren Wellenlängenbereich des Lichtes besitzt und im infraroten Wellenlängenbereich des Lichtes eine derartige Transparenz besitzt, dass die Reflektivität des Sicherheitsfeldes (16) im infraroten Wellenlängenbereich von einem Untergrund des Sicherheitsfeldes (16) bestimmt ist, auf den die Farbe aufgetragen ist und der eine höhere Reflektivität besitzt als die Farbe des Sicherheitsfeldes (16) im sichtbaren Wellenlängenbereich des Lichtes, so dass die Reflektivität des Sicherheitsfeldes (16) im infraroten Wellenlängenbereich höher ist als im sichtbaren Wellenlängenbereich, wobei das Signet (12) ferner ein Signalfeld (18) umfasst, welches in einer festen räumlichen Zuordnung zum Sicherheitsfeld (16) angeordnet ist und in einem breiten Wellenlängenbereich, der sichtbares wie infrarotes Licht einschließt entweder eine vergleichsweise hohe Reflektivität oder eine vergleichsweise niedrige Reflektivität aufweist, je nach dem ob der Untergrund des Sicherheitsfeldes (16) metallisch reflektierend oder diffus reflektierend ist, wobei das Vefahren die folgenden Schritte aufweist:
- Erfassen einer Intensität von dem Sicherheitsfeld (16) des Signets (12) reflektierten Lichtes in wenigstens zwei unterschiedlichen Wellenlängenbereichen, von denen ein Wellenlängenbereich ein Wellenlängenbereich ist bei dem die Farbe des Sicherheitsfeldes (16) eine hohe Transparenz besitzt, während der andere Wellenlängenbereich ein Wellenlängenbereich ist bei dem die Farbe des Sicherheitsfeldes (16) eine geringe Reflektivität besitzt, so dass das Sicherheitsfeld (16) in diesem Wellenlängenbereich dunkel erscheint,
- Auslesen des Signalfelds (18) des Signets (12),
- Einstellen einer von zwei Referenzschwellen für die Bewertung der Stärke des von der Ausleseeinheit (34) erfassten, vom Sicherheitsfeld (16) reflektierten Lichtes in Abhängigkeit davon, ob dass Signalfeld (18) eine hohe oder eine niedrige Reflektivität besitzt, und
- Bewerten der Stärke des von der Ausleseeinheit (34) erfassten, vom Sicherheitsfeld im infraroten Wellenlängenbereich reflektierten Lichtes durch Vergleich mit der eingestellten Referenzschwelle.

8. Verfahren nach Anspruch 7, welches mit einer Ausleseeinheit gemäß einem der Ansprüche 1 bis 6 durchgeführt wird.

## Claims

1. Reading device (34) for a signet (12) of a packaging with an outer covering, which forms a substrate onto which the signet (12) is applied externally, wherein the signet comprises a plurality of adjacent fields with different reflection properties, one field of which is a safety field (16) with a colour which has a low reflectivity in a visible wavelength range of light and in the infrared wavelength range of light has such a level of transparency that the reflectivity of the safety field (16) is determined in the infrared wavelength range by an undercoat of the safety field (16), onto which the colour is applied and which has a greater reflectivity than the colour of the safety field (16) in the visible wavelength range of light, so that the reflectivity of the safety field (16) in the infrared wavelength range is greater than in the visible wavelength range, wherein the signet (12) also comprises a signal field (18) which is arranged in a fixed spatial allocation to the safety field (16) and in a broad wavelength range, which includes visible and infrared light, has either a comparatively high reflectivity or a comparatively low reflectivity, depending on whether the undercoat of the safety field (16) is metallically reflecting or diffusely reflecting, **characterised in that** the reading unit (34) is designed
- to determine an intensity of the safety field (16) of the signet (12) reflected light in at least two different wavelength ranges, one wavelength range of which is a wavelength range in which the colour of the safety field (16) has a high degree of transparency, whilst the other wavelength range is a wavelength range in which the colour of the safety field (16) has a low reflectivity, so that the safety field (16) in this wavelength range appears dark,
- to read the signal field (18) of the signet (12),
- to set one of two reference thresholds for evaluating the strength of the light detected by the reading unit (34) and reflected by the safety field (16) depending on whether the signal field (18) has a high or a low reflectivity, and
- to evaluate the strength of the light detected by the reading unit (34) and reflected by the safety field in the infrared wavelength range by comparison with the adjusted reference threshold.

2. Reading unit according to claim 1, **characterised in that** the reading unit comprises an image capturing module (36) with a surface sensor (40), preferably with matrix-like, light-sensitive sensor elements for detecting an image pictured on the sensor in two dimensions, which are light-sensitive both in the visible wavelength range of light and in the infrared wavelength range.

3. Reading unit according to claim 2, **characterised in that** the reading unit (34) comprises a lighting module (38.1, 38.2) which is designed and arranged to illuminate a visible range of the image capturing module (36) at the same time or alternately with light in the visible wavelength range and in the infrared wavelength range.

4. Reading unit according to claim 3, **characterised in that** the lighting module (38.1, 38.2) in the operation of the reading unit (34) radiates light in the visible wavelength range with two main wavelengths, one of which corresponds to a red light and the other main wavelength corresponds to blue light.

5. Reading unit according to claim 3 or 4, **characterised in that** the lighting module (38.1, 38.2) comprises light-emitting diodes as light sources.

6. Reading unit according to claim 5, **characterised in that** the lighting module (38.1, 38.2) has different light-emitting diodes, of which a first number of light-emitting diodes in the operation of the reading unit emits light in an infrared wavelength range, the wavelength of which is coordinated to the colour of the safety field (16), so that the emitted wavelength is a maximun of 100 nm above a wavelength at which the transparency of the colour is between 40% and 60%.

7. Method for operating a reading unit (34) for a signet (12) of packaging with an outer covering, which forms a substrate on which the signet (12) is applied externally, wherein the signet comprises a plurality of adjacent fields with different reflection properties, one field of which is a safety field (16) with a colour which has a low reflectivity in a visible wavelength range of light and in the infrared wavelength range of light has such a level of transparency that the reflectivity of the safety field (16) is determined in the infrared wavelength range by an undercoat of the safety field (16), onto which the colour is applied and which has a greater reflectivity than the colour of the safety field (16) in the visible wavelength range of light, so that the reflectivity of the safety field (16) in the infrared wavelength range is greater than in the visible wavelength range, wherein the signet (12) also comprises a signal field (18) which is arranged in a fixed spatial allocation to the safety field (16) and in a broad wavelength range, which includes visible and infrared light, has either a comparatively high reflectivity or a comparatively low reflectivity, depending on whether the undercoat of the safety field (16) is metallically reflecting or diffusely reflecting, wherein the method comprises the following steps:
- detecting an intensity of the safety field (16) of the signet (12) reflected light in at least two different wavelength ranges, one wavelength range of which is a wavelength range in which the colour of the safety field (16) has a high degree of transparency, whilst the other wavelength range is a wavelength range in which the colour of the safety field (16) has a low reflectivity, so that the safety field (16) in this wavelength range appears dark,
- reading the signal field (18) of the signet (12),
- setting one of two reference thresholds for evaluating the strength of the light detected by the reading unit (34) and reflected by the safety field (16) depending on whether the signal field (18) has a high or a low reflectivity, and
- evaluating the strength of the light detected by the reading unit (34) and reflected by the safety field in the infrared wavelength range by comparison with the set reference threshold.

8. Method according to claim 7, which is performed with a reading unit according to any one of claims 1 to 6.

## Revendications

1. Unité de lecture (34) pour un signet (12) d'un emballage comprenant une enveloppe extérieure, qui forme un substrat, sur lequel le signet (12) est appliqué à l'extérieur, le signet présentant plusieurs zones disposées les unes à côté des autres avec différentes propriétés de réflexion, dont l'une d'entre elles est une zone de sécurité (16) avec une couleur, qui présente une faible réflectivité dans une plage de longueurs d'onde visible de la lumière et présente une transparence dans la plage de longueurs d'onde infrarouge de la lumière, telle que la réflectivité de la zone de sécurité (16) dans la plage de longueurs d'onde infrarouge est déterminée par un support de la zone de sécurité (16), sur lequel la couleur est appliquée et qui présente une réflectivité supérieure à la couleur de la zone de sécurité (16) dans la plage de longueurs d'onde visible de la lumière, de sorte que la réflectivité de la zone de sécurité (16) dans la plage de longueurs d'onde infrarouge est plus élevée que dans la zone de longueurs d'onde visible, le signet (12) comprenant également une zone de signal (18), qui est disposée dans une attribution fixe dans l'espace à la zone de sécurité (16) et présente dans une large plage de longueurs d'onde, qui enferme de la lumière visible et de la lumière infrarouge, soit une réflectivité comparativement élevée soit une réflectivité comparativement faible, selon que le support de la zone de sécurité (16) est réfléchissant de façon métallique ou réfléchissant de façon diffuse, **caractérisée en ce que** l'unité de lecture (34) est conçue
- pour enregistrer une intensité de lumière réfléchie par la zone de sécurité (16) du signet (12) dans au moins deux plages différentes de longueurs d'onde, dont une plage de longueurs d'onde présente une plage dans laquelle la couleur de la zone de sécurité (16) a une transparence élevée, alors que l'autre plage de longueurs d'onde est une plage de longueurs d'onde dans laquelle la couleur de la zone de sécurité (16) a une faible réflectivité, de sorte que la zone de sécurité (16) semble sombre dans cette plage de longueurs d'onde,
- pour lire la zone de signal (18) du signet (12),
- pour régler l'un de deux seuils de référence pour l'évaluation de l'intensité de la lumière enregistrée par l'unité de lecture (34) et réfléchie par la zone de sécurité (16), en fonction du fait que la zone de signal (18) a une réflectivité élevée ou une faible réflectivité, et
- pour évaluer l'intensité de la lumière enregistrée par l'unité de lecture (34) et réfléchie par la zone de sécurité dans la plage de longueurs d'onde infrarouge par comparaison avec le seuil de référence réglé.

2. Unité de lecture selon la revendication 1, **caractérisée en ce que** l'unité de lecture présente un module d'enregistrement d'image (36) avec un capteur de surface (40) doté d'éléments de capteur sensibles à la lumière, disposés de préférence à la façon d'une matrice, pour l'enregistrement d'une image reproduite sur le capteur en deux dimensions, qui sont sensibles à la lumière aussi bien dans la plage de longueurs d'onde visible de la lumière que dans la plage de longueurs d'onde infrarouge.

3. Unité de lecture selon la revendication 2, **caractérisée en ce que** l'unité de lecture (34) présente un module d'éclairage (38.1, 38.2), qui est conçu et disposé de façon à éclairer une zone visible du module d'enregistrement d'image (36) en même temps ou de façon alternative avec de la lumière dans la plage de longueurs d'onde visible ou dans la plage de longueurs d'onde infrarouge.

4. Unité de lecture selon la revendication 3, **caractérisée en ce que** le module d'éclairage (38.1, 38.2) diffuse, pendant le fonctionnement de l'unité de lecture (34), de la lumière dans la plage de longueurs d'onde visible avec deux longueurs d'onde principales, dont l'une correspond à une lumière rouge et l'autre à une lumière bleue.

5. Unité de lecture selon la revendication 3 ou 4, **caractérisée en ce que** le module d'éclairage (38.1, 38.2) présente des diodes électroluminescentes comme sources de lumière.

6. Unité de lecture selon la revendication 5, **caractérisée en ce que** le module d'éclairage (38.1, 38.2) présente différentes diodes électroluminescentes, dont un premier nombre de diodes électroluminescentes émet, pendant le fonctionnement de l'unité de lecture, de la lumière dans une plage de longueurs d'onde infrarouge, dont la longueur d'onde est adaptée à la couleur de la zone de sécurité (16), de sorte que la longueur d'onde émise est au maximum de 100 nm au-dessus d'une longueur d'onde, à laquelle la transparence de la couleur se situe entre 40 et 60 %.

7. Procédé pour faire fonctionner une unité de lecture (34) pour un signet (12) d'un emballage avec une enveloppe extérieure, qui forme un substrat, sur lequel le signet (12) est appliqué à l'extérieur, le signet présentant plusieurs zones disposées les unes à côté des autres avec différentes propriétés de réflexion, dont une zone est une zone de sécurité (16) avec une couleur qui a une faible réflectivité dans une plage de longueurs d'onde visible de la lumière et, dans la plage de longueurs d'onde infrarouge de la lumière, une transparence telle que la réflectivité de la zone de sécurité (16) dans la plage de longueurs d'onde infrarouge est déterminée par un support de la zone de sécurité (16), sur laquelle la couleur est appliquée et qui présente une réflectivité plus élevée que la couleur de la zone de sécurité (16) dans la plage de longueurs d'onde visible de la lumière, de sorte que la réflectivité de la zone de sécurité (16) dans la plage de longueurs d'onde infrarouge est plus élevée que dans la plage de longueurs d'onde visible, le signet (12) comprenant également une zone de signal (18), qui est disposée dans une attribution fixe dans l'espace à la zone de sécurité (16) et présente dans une large plage de longueurs d'onde, qui inclut de la lumière visible comme de la lumière infrarouge, soit une réflectivité comparativement élevée, soit une réflectivité comparativement faible, en fonction du fait que le support de la zone de sécurité (16) est réfléchissant de façon métallique ou réfléchissant de façon diffuse, le procédé présentant les étapes suivantes :
- enregistrement d'une intensité de lumière réfléchie par la zone de sécurité (16) du signet (12) dans au moins deux plages de longueurs d'onde différentes, dont une plage est une plage de longueurs d'onde à laquelle la couleur de la zone de sécurité (16) présente une transparence élevée, alors que l'autre plage de longueurs d'onde est une plage de longueurs d'onde dans laquelle la couleur de la zone de sécurité (16) présente une faible réflectivité, de sorte que la zone de sécurité (16) semble sombre dans cette plage de longueurs d'onde,
- lecture de la zone de signal (18) du signet (12),
- réglage de l'un de deux seuils de référence pour l'évaluation de l'intensité de la lumière, enregistrée par l'unité de lecture (34) et réfléchie par la zone de sécurité (16), en fonction du fait que la zone de signal (18) a une réflectivité élevée ou une faible réflectivité, et
- évaluation de l'intensité de la lumière enregistrée par l'unité de lecture (34) et réfléchie par la zone de sécurité dans la plage de longueurs d'onde infrarouge par comparaison avec le seuil de référence réglé.

8. Procédé selon la revendication 7, qui est mis en oeuvre avec une unité de lecture selon l'une des revendications 1 à 6.
